# EUROPEAN PATENT APPLICATION

(11) **EP 4 674 269 A1**
(43) Date of publication of application: **07.01.2026**
(21) Application number: 24763988.3
(22) Date of filing: 28.02.2024
(51) Int. Cl.: A01N 65/42, A01G 7/06, A01G 31/00, A01P 21/00

(54) **PLANT GROWTH-PROMOTING COMPOSITION**

(30) Priority: 28.02.2023 JP 2023029537
(71) Applicant: Agri Smile, Inc., Tokyo 101-0052 (JP)
(72) Inventor: HAYASHI, Daisuke, Tokyo 101-0052 (JP); WATANABE, Hiroko, Tokyo 101-0052 (JP)
(74) Representative: Hoffmann Eitle
(86) International application number: PCT/JP2024/007358
(87) International publication number: WO 2024/181510

(57) **Abstract**

Provided is a plant growth-promoting composition containing a green onion extract or green onion powder as an active component.

## Description

### Technical Field

The present invention relates to a plant growth-promoting composition and a method of promoting plant growth.

### Background Art

Due to the current explosive population growth, producing sufficient amounts of food-producing plants has become a global challenge. In addition, problems such as land desertification caused by the reduction of green spaces and problems such as increasing surface temperatures caused by a global warming phenomenon have emerged, and environmental problems in plant growth are increasing. In other words, excessive stress on plants due to global environmental factors often causes problems in plant growth.

Consequently, there is a demand for techniques that enable more efficient harvests than conventional methods, and biostimulants have attracted attention as a new technique for alleviating plant damage caused by climate or soil conditions by controlling abiotic stress in plants, thereby providing healthy plants.

Patent Literature 1 discloses a plant stoma opening promoter containing stevia, and reports that heat stress resistance is improved by artificially promoting stoma openings in plants using stevia.

Patent Literature 2 discloses a gene activating composition which contains a yeast cell wall degradation product and activates ethylene and/or jasmonate signaling pathways, and reports that, when the yeast cell wall degradation product is administered to plants, the expression of plant defensin genes involved in antibacterial properties and disease prevention of the plant body is activated.

Patent Literature 3 discloses a method of increasing the yield of cereal grains by inoculating a cell wall-containing substance of a methanol-utilizing bacterium into a plant body for culturing cereal grains.

### Citation List

### Patent Literature

Patent Literature 1: Japanese Patent No. 6741262
Patent Literature 2: Japanese Patent No. 4931388
Patent Literature 3: Patent Publication JP-A-2019-180361

### Summary of Invention

### Technical Problem

As described above, studies conducted so far have been on improving abiotic stress resistance and increasing yields in plants using various materials, but there have been no reports on the use of green onion extracts or green onion powders.

### Solution to Problem

The inventors conducted extensive studies and as a result, found that, among various materials, a green onion extract or green onion powder serves as an active component for promoting plant growth by using a uniquely developed highly accurate screening method, and completed the present invention.

Specifically, the present invention is as follows.
[1] A plant growth-promoting composition containing a green onion extract or green onion powder as an active component.
[2] The plant growth-promoting composition according to [1], having one or more plant growth promoting effects selected from the group consisting of elongation of stems, leaves or roots, an increase in the number of leaves, promotion of flowering or fruiting, an increase in the number of flowers or fruits, an increase in the plant body weight or crop yield, greening, and promotion of tillering.
[3] The plant growth-promoting composition according to [1] or [2], having an effect of improving abiotic stress resistance.
[4] The plant growth-promoting composition according to [3], having an effect of improving stress resistance to one or more stresses selected from the group consisting of temperature stress, chemical stress, light stress, drought stress, pH stress, salt stress, anoxic stress, herbivory stress, physical stress, and disease stress.
[5] The plant growth-promoting composition according to [3], which activates genes in a stress response system.
[6] A method of promoting plant growth, including applying a plant growth-promoting composition containing a green onion extract or green onion powder as an active component to plants, or soil or a culture solution in which plants grow.
[7] The method of promoting plant growth according to [6],
   wherein the amount of the plant growth-promoting composition used with respect to the culture solution is 0.001 to 1 mass%.

### Advantageous Effect of Invention

When the composition containing the green onion extract or green onion powder of the present invention is applied to plants, plant growth can be promoted more safely and less expensively compared to conventional materials.

### Brief Description of Drawings

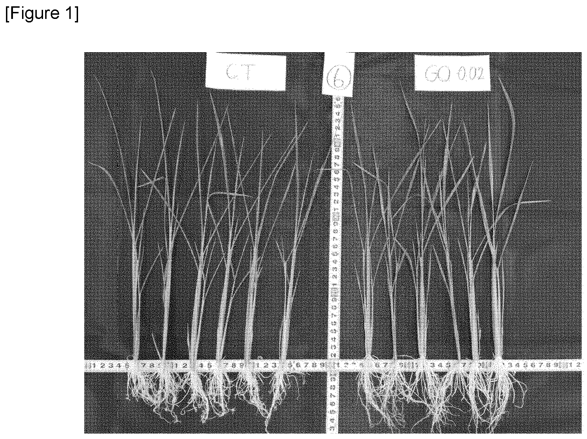

[Figure 1] Figure 1 is an image showing the improvement in rice plant root development observed when no green onion extract or green onion powder was added and when 0.18 g of a plant growth-promoting composition containing a green onion extract was added (Example 1).

### Description of Embodiments

Hereinafter, a form for implementing the present invention (hereinafter referred to as "the present embodiment") will be described in detail. Here, the present invention is not limited to the present embodiment, and can be variously modified without departing from the scope and spirit thereof.

### <Plant growth-promoting composition>

The plant growth-promoting composition in the present embodiment contains a green onion extract or green onion powder as an active component. Green onions are plants belonging to the genus *Allium* of the family Amaryllidaceae. Specifically, *Allium fistulosum L.* may be exemplified. The variety and origin of green onions are not particularly limited, and examples of varieties include Welsh onions, green onions, red onions, chives, and Kujo green onions.

In the present embodiment, the green onion extract is a product obtained by extracting and concentrating specific components from green onions, and is not particularly limited. The green onion extract can be obtained, for example, by the method described in <Method of preparing plant growth-promoting composition> described below. In addition, the green onion powder is obtained by drying and crushing green onions or green onion extracts and is not particularly limited.

The plant growth-promoting composition in the present embodiment is a composition having a plant growth promoting effect, and here, examples of plant growth promoting effects include growth promoting effects such as elongation of stems, leaves or roots, an increase in the number of leaves, promotion of flowering or fruiting, an increase in the number of flowers or fruits, an increase in the plant body weight or crop yield, greening, and promotion of tillering.

More specifically, the case where a plant growth promoting effect is observed refers to, for example, a case in which the physical weight increment (%) or dry weight increment (%) is increased when the plant growth-promoting composition of the present embodiment is used compared to when the plant growth-promoting composition is not used. The physical weight increment (%) or dry weight increment (%) when using the plant growth-promoting composition is increased by preferably 10% or more, more preferably 20% or more, and still more preferably 30% or more compared to when the plant growth-promoting composition of the present embodiment is not used. The case where the plant growth promoting effect is observed includes a situation where no growth is observed at all when the plant growth-promoting composition is not used, but growth is observed when the plant growth-promoting composition is used. Here, the numerical values are average values for all plants to which the plant growth-promoting composition is applied.

Other plant growth promoting effects include the following effects of improving plant activity.
1) root elongation and improved root establishment rate
2) increased nutrient absorption efficiency
3) induction of flower buds, promotion of flowering, and increase in fruit production
4) accumulation of components such as sugars
5) increased water saving effect
6) callus induction effect
7) increased size of plant bodies, particularly elongation or enlargement of above-ground and below-ground parts
8) wound repair

That is, the plant growth-promoting composition of the present embodiment may have the above effects 1) to 8) in addition to the growth promoting effect such as elongation of stems, leaves or roots, an increase in the number of leaves, promotion of flowering or fruiting, an increase in the number of flowers or fruits, an increase in the plant body weight or crop yield, greening, or promotion of tillering.

The plant growth-promoting composition in the present embodiment may have an effect of improving abiotic stress resistance. That is, it may impart resistance to various general abiotic (environmental) stresses that plants experience. Here, examples of abiotic stresses include temperature stresses such as high-temperature stress and low-temperature stress, chemical stress, light stress, drought stress, pH stresses such as oxidative stress, salt stresses such as osmotic stress, anoxic stress, herbivory stress, physical stress, and disease stress.

In the present embodiment, the term "abiotic stress resistance" refers to a trait that allows plants to grow normally without being substantially affected by undesirable effects such as growth failure (withering), poor growth (for example, bleaching or yellowing of plant bodies, reduced root length or reduced number of leaves), reduced growth rate, or reduced plant body weight or crop yield even under growth conditions involving environmental stress. When the abiotic stress resistance of plants is improved using the plant growth-promoting composition of the present embodiment, the plants can be grown normally even in external environments that are unfavorable to the growth of ordinary plants.

The effect of imparting temperature stress resistance of the plant growth-promoting composition in the present embodiment includes, for example, an effect of promoting normal growth in high-temperature conditions of 35°C to 45°C and low-temperature conditions of 0°C to 10°C. In addition, the effect of imparting salt stress allows normal growth in the presence of 0.1 to 3.0 mass% of sodium chloride. The drought stress resistance imparting effect allows normal growth even at a relative humidity of 10 to 40%.

In the present embodiment, the abiotic stress resistance of plants can be evaluated by, for example, the following means. The presence of salt stress resistance can be confirmed by growing a target plant in a medium or soil containing an appropriate concentration of a salt under conditions of a growth temperature and growth period suitable for the plant and evaluating its phenotype. The presence of drought stress resistance can be confirmed by growing a target plant under conditions of a growth temperature, growth humidity and growth period that represent a drought state for the plant and evaluating its phenotype. In addition, the presence of low-temperature stress resistance can be confirmed by acclimating a target plant at a low temperature that does not cause freezing, and then growing it under conditions of a growth temperature and growth period suitable for the plant, and evaluating its phenotype.

When the plant growth-promoting composition in the present embodiment has an effect of improving abiotic stress resistance, it may activate genes in a stress response system. The genes in the stress response system are not particularly limited, and examples thereof include genes generally known as indicators of response to temperature stress or drought stress.

The plant growth-promoting composition in the present embodiment may contain a green onion extract or green onion powder alone or may contain one or more agriculturally acceptable components in combination. The agriculturally acceptable component is not particularly limited, and examples thereof include solvents, carriers, excipients, binders, solubilizing agents, stabilizers, thickeners, swelling agents, lubricants, surfactants, oily liquids, buffering agents, bactericides, antifreezing agents, antifoaming agents, colorants, antioxidants, and additional active components. As the agriculturally acceptable carriers, preferable agriculturally acceptable liquid carriers include water, mineral oil fractions such as kerosene or diesel oil, oils derived from plants or animals, cyclic or aromatic hydrocarbons (for example, paraffin, tetrahydronaphthalene, alkylated naphthalenes or derivatives thereof, and alkylated benzenes or derivatives thereof), alcohols (for example, methanol, ethanol, propanol, butanol and cyclohexanol), ketones (for example cyclohexanone), amines (for example, N-methylpyrrolidone), and mixtures thereof.

When the plant growth-promoting composition in the present embodiment contains one or more additional active components, various compounds having environment stress resistance improving activity known in the present technical field can be applied as the additional active components. When the plant growth-promoting composition contains such one or more additional active components, there is a tendency for the abiotic stress resistance of the plants to be further improved.

The plant growth-promoting composition in the present embodiment can be used in combination with conventionally known agricultural materials such as pesticides and fertilizers, and it is preferable to use components derived from microorganisms, bacteria such as actinomycetes or yeast as the agricultural materials.

The plant growth-promoting composition in the present embodiment can be used as an agricultural chemical formulation or pesticide to promote plant growth. The plant growth-promoting composition may be in any form, for example, a solid (for example, powder or granules) or a liquid (for example, a solution or suspension), and it is preferably used in a liquid form such as a solution or a suspension. When the composition is used as a solution, it may be in a liquid state or may be used as a liquid prepared just before application.

The formulation of the plant growth-promoting composition of the present embodiment is not particularly limited, and can be prepared into a formulation commonly used in the present technical field such as an emulsion, a wettable powder, a liquid, a water-soluble powder, a dusting powder, a powder, a paste or a granule.

In the present embodiment, the plants to which the plant growth-promoting composition is applied are not particularly limited, and include, for example, angiosperms and gymnosperms. Examples of target plants *Asteraceae* plants such as chrysanthemums and gerberas, family of Solanaceae plants such as potatoes, tomatoes and eggplants, family of Brassicaceae plants such as rapeseed and mustard greens, family of Poaceae plants such as rice plants, corn, wheat, sugarcane, and barley, family of Fabaceae plants such as soybeans, family of Apiaceae plants such as carrots,family of Lamiaceae plants such as basil, mint, and rosemary, family of Convolvulaceae plants such as morning glories, family of Salicaceae plants such as poplars, family of Euphorbiaceae plants such as castor beans, cassava, and jatropha, family of Convolvulaceae plants such as sweet potatoes, family of Rutaceae plants such as oranges and lemons, family of Rosaceae plants such as cherry blossoms and roses, family of Orchidaceae plants such as genus *Phalaenopsis,* family of Gentianaceae plants such as Turkish bellflower, family of Primulaceae plants such as cyclamens, family of Violaceae plants such as pansies, family of Liliaceae plants such as lilies, family of Amaranthaceae plants such as sugar beets, family of Vitaceae plants such as grapes, family of Cupressaceae plants such as cedars and cypresses, family of Oleaceae plants such as olives and osmanthus, and family of Pinaceae plants such as red pine.

The target plant may include not only the entire plant (that is, the complete plant body) but also parts of plants such as plant tissues or organs (for example, cut flowers or vegetative propagation organs such as rhizomes, tuberous roots, bulbs or runners), cultured cells and/or callus.

The plant growth-promoting composition in the present embodiment can be applied to the entire plant or parts thereof (for example, seeds, seedlings or the entire mature plant or parts thereof) at any growth stage, including before plant germination or after plant germination.

### <Method of preparing plant growth-promoting composition>

The method of preparing a plant growth-promoting composition can be achieved, for example, by obtaining a green onion extract or green onion powder, and then mixing it with the above agriculturally acceptable component as necessary.

The method of obtaining a green onion extract is not particularly limited, and general methods of extracting a plant extract can be used. Specifically, it can be obtained by, for example, a method including a step of crushing green onion pulp and then removing impurities to obtain green onion juice, a step of concentrating the green onion juice obtained in the above step to obtain a green onion concentrate, and a step of fractionating the green onion concentrate obtained in the above step to obtain a green onion extract containing specific components.

The method of obtaining a green onion powder is not particularly limited, and the green onion powder can be obtained by drying a fresh or frozen green onion or green onion extract by a method such as hot air drying, air drying, dry heat drying, or drying under a reduced pressure, and then crushing the dried product into a powder.

### (Crushing and removal step)

The crushing of green onions can be performed, for example, in a mixer using fresh green onion or dried green onions. The crushed green onions are filtered through a filter cloth, a paper filter or the like to obtain green onion juice from which impurities have been removed. When filtering is performed, an extraction solvent such as water or an alcohol may be added in advance. In addition, in place of filtering, impurities may be removed by a method of obtaining a supernatant using a centrifuge.

### (Concentration step)

The obtained green onion juice can be concentrated using a rotary evaporator or the like to obtain a green onion concentrate. Concentration may be performed using a centrifugal evaporator or by freeze-drying. The concentration rate during concentration is preferably 3- to 30-fold, and more preferably 4- to 20-fold. When the concentration rate is 5-fold or more, since the amount of the plant growth-promoting composition added to plants is reduced, handling properties are improved, and transportation costs tend to be lowered, and when the concentration rate is 30-fold or less, there is a tendency for the plant growth-promoting composition to produce fewer precipitates and to be easier to handle.

Here, in the preparation of the plant growth-promoting composition, concentration of the green onion juice is not essential, and the obtained green onion juice may be directly subjected to the following fractionation step.

### (Fractionation step)

The obtained green onion concentrate can be fractionated through a column or the like to obtain a green onion extract containing specific components. In the fractionation step, for example, when the concentrate passes through a column, hydrophilic fractions and hydrophobic fractions are obtained, and among them, hydrophilic fractions are preferably used as green onion extracts. In addition, the green onion concentrate may be subjected to a heat treatment in an autoclave or the like before it is fractionated through a column or the like.

The green onion extract obtained in the fractionation step may be additionally subjected to, as necessary, a purification treatment or a highly active fraction separation treatment. Examples of purification treatments include treatments using filtration, adsorption (ion exchange resin column, activated carbon column, etc.) and the like. In addition, examples of highly active fraction separation treatments include gel filtration, adsorption treatment, silica gel column chromatography, HPLC treatment, and the like.

### <Method of promoting plant growth>

The method of promoting plant growth in the present embodiment is a method of promoting plant growth by applying a composition containing the above green onion extract or green onion powder as an active component to plants, or soil or a culture solution in which plants grow. In the method, the plant growth-promoting composition can be applied to plants or parts thereof (for example, seeds, seedlings or mature plant body) at any growth stage, including before germination or after germination. In addition, the plant growth-promoting composition can be applied not only to the plants themselves but also to the soil, medium or culture solution in which the plants grow. The plant growth can be promoted by applying the plant growth-promoting composition to the plants in the growth stage or the soil, medium or culture solution in which the plants grow.

The number of times the plant growth-promoting composition is applied to plants may be once or a plurality of times. In addition, when the plant growth-promoting composition is applied at a plurality of application periods, it may be applied once or a plurality of times at each application period.

Means for applying the plant growth-promoting composition to plants includes, for example, addition, spraying, coating, and immersion. These may be performed alone or two or more thereof may be performed in combination.

Regarding the amount of the plant growth-promoting composition applied to plants, when the plant growth-promoting composition is applied to a culture solution in which plants grow, the amount of the plant growth-promoting composition used with respect to the culture solution is preferably 0.1 to 5 vol%. When the amount of the plant growth-promoting composition used is within the above range, a sufficient plant growth promoting effect tends to be obtained.

Here, a preferable numerical range of the usage amount varies depending on the concentration rate of the green onion juice described above, but the usage amount is a preferable numerical range when the concentration rate is 3- to 30-fold.

### Examples

The present invention will be described in more detail with reference to examples and comparative examples, but the present invention is not limited to these examples.

### (Method of measuring root weight)

The roots were identified based on the color and shape of rice plants, and the weight of the identified roots was measured using a microbalance.

### [Example 1]

128.5 g of green onion was cut into 1 cm segments and then crushed using a mixer. Impurities were removed by filtration using a filter cloth or a paper filter. The obtained filtrate was concentrated about 10-fold using a rotary evaporator to obtain a green onion extract.

0.18 g (0.02 mass%) of the hydrophilic fraction containing the green onion extract obtained above was added to 900 mL of a culture solution in which starved rice plants were grown, and the effect on the rice plants was investigated. As a result, the weight of the rice plant roots increased by 62.4% compared to when no green onion extract was added, and an effect of improving rice plant root development was observed.

Here, the starvation state refers to a state with nutrient components of which amounts are below those shown in the following Table 1.

**[Table 1]**

| Table 1 Kimura B solution composition table | |
|---|---|
| Component | Amount (mg/l) |
| **N** | **23.0** |
| **(N0.-H)** | **10. 2** |
| **(N0,-N)** | **12.8** |
| **P₂O₃** | **13.0** |
| **K₂O** | **17.2** |
| **CaO** | **20.5** |
| **MgO** | **22.1** |
| **Fc₂O₃** | **2~3** |

### [Example 2]

The same method as in Example 1 was performed, except that the amount of the hydrophilic fraction containing the green onion extract added was 0.36 g. As a result, the weight of the rice plant roots increased by 38.5% compared to when no green onion extract was added, and an effect of improving rice plant root development was observed.

### [Example 3]

105.6 g of green onion was cut into 1 cm segments, then dried in a dry heat dryer at 60°C for 3 days, and then crushed using a mixer to obtain a green onion powder.

0.18 g (0.02 mass%) of the green onion powder obtained above was added to 900 mL of a culture solution in which starved rice plants were grown, and the effect on the rice plants was investigated. As a result, the weight of the rice plant roots increased by 49.6% compared to when no green onion extract was added, and an effect of improving rice plant root development was observed.

### [Example 4]

The same method as in Example 3 was performed, except that the amount of green onion powder added was 0.36 g. As a result, the weight of the rice plant roots increased by 24.5% compared to when no green onion powder was added, and an effect of improving rice plant root development was observed.

## Claims

1. A plant growth-promoting composition comprising a green onion extract or green onion powder as an active component.

2. The plant growth-promoting composition according to claim 1, having one or more plant growth promoting effects selected from the group consisting of elongation of stems, leaves or roots, an increase in the number of leaves, promotion of flowering or fruiting, an increase in the number of flowers or fruits, an increase in the plant body weight or crop yield, greening, and promotion of tillering.

3. The plant growth-promoting composition according to claim 1 or 2, having an effect of improving abiotic stress resistance.

4. The plant growth-promoting composition according to claim 3, having an effect of improving stress resistance to one or more stresses selected from the group consisting of temperature stress, chemical stress, light stress, drought stress, pH stress, salt stress, anoxic stress, herbivory stress, physical stress, and disease stress.

5. The plant growth-promoting composition according to claim 3, which activates genes in a stress response system.

6. A method of promoting plant growth, comprising applying a plant growth-promoting composition containing a green onion extract or green onion powder as an active component to plants, or soil or a culture solution in which plants grow.

7. The method of promoting plant growth according to claim 6,
wherein the amount of the plant growth-promoting composition used with respect to the culture solution is 0.001 to 1 mass%.
